# EUROPÄISCHE PATENTSCHRIFT

(11) **EP 2 829 502 B1**
(45) Veröffentlichungstag und Bekanntmachung des Hinweises auf die Patenterteilung: **01.07.2015**
(21) Anmeldenummer: 13003747.6
(22) Anmeldetag: 26.07.2013
(51) Int. Cl.: B66F 9/14, B65G 1/04

(54) **Lastaufnahmevorrichtung für ein Regalbediengerät**
Load bearing device for a rack retrieval system
Dispositif de réception de charge pour un appareil de commande de rayonnage

(43) Veröffentlichungstag der Anmeldung: 28.01.2015
(73) Patentinhaber: MLOG Logistics GmbH, 74196 Neuenstadt am Kocher (DE)
(72) Erfinder: Furmans, Kai Prof., 76337 Waldbronn, Albtal (DE); Schaffroth, Hartmut, 74196 Neuenstadt (DE); Linsel, Peter, 76135 Karlsruhe (DE); Nobbe, Christoph, 76131 Karlsruhe (DE); Leichtle, Georg, 74194 Schwaigern (DE); Waldbüsser, Thomas, 74248 Ellhofen (DE)
(74) Vertreter: Schmid, Barbara

(56) Entgegenhaltungen:
- EP-A1- 0 697 368
- EP-A1- 1 714 937
- WO-A1-2009/150684
- GB-A- 1 276 336

## Beschreibung

### TECHNISCHES GEBIET

Die Erfindung betrifft eine Lastaufnahmevorrichtung für ein Regalbediengerät. Derartige Regalbediengeräte werden in Lagergassen von insbesondere Hochregallagern eingesetzt, um Lagergüter in Regallagerplätzen ein oder auszulagern beziehungsweise umzulagern. Die Lagergüter sind dabei in der Regel auf Ladehilfsmitteln positioniert, so dass die Lastaufnahmemittel der Lastaufnahmevorrichtung mit ihren Aufnahmezinken in entsprechende Freiräume an der Unterseite des Ladehilfsmittels eingefahren werden können.

### STAND DER TECHNIK

Lastaufnahmemittel für Regalbediengeräte sind bekannt. Diese weisen in der Regel meist zwei oder mehrere Teleskopelemente auf. Die Teleskopelemente sind an einem Basiselement längsverschieblich gelagert, wobei das Basiselement an dem Regalbediengerät befestigt ist. Das unterste Teleskopelement ist direkt an dem Basiselement gelagert, das oberste Teleskopelement weist zumindest einen Aufnahmezinken auf, der in entsprechende Freiräume an der Unterseite des Ladehilfsmittels eingefahren werden kann. Zwischen dem untersten und dem obersten Teleskopelement kann ein einzelnes mittleres Teleskopelement vorhanden sein; es wäre auch möglich, mehrere mittlere Teleskopelemente vorzusehen. Im Gegensatz dazu kann das oberste Teleskopelement auch direkt an dem untersten Teleskopelement gelagert sein, so dass keine mittleren Teleskopelement vorhanden sind.

Aus der EP 0 697 368 A1 ist eine Lastaufnahmevorrichtung für ein Regalbediengerät mit zumindest einem teleskopierbar ausgebildeten Lastaufnahmemittel bekannt. Das Lastaufnahmemittel weist mehrere Teleskopelement auf, von denen das oberste als Aufnahmezinken ausgebildet ist und das unterste an einem Basiselement verschieblich gelagert ist. Das Basiselement wiederum ist an dem Regalbediengerät befestigt. Entsprechend der EP 1 714 937 A1 kann an dem untersten Teleskopelement ein Stützelement ortsfest vorhanden sein, durch das dieses unterste Teleskopelement von unten abgestützt werden kann, um die Durchbiegung des untersten Teleskopelements zu reduzieren.

Das Regalbediengerät kann in der Lagergasse verfahren werden und vor dem entsprechenden Regalplatz positioniert werden. Zum Auslagern der Lagergüter wird das Lastaufnahmemittel ausgefahren, bis der oder die Aufnahmezinken in den Freiraum des Ladehilfsmittels positioniert ist beziehungsweise sind. Durch ein Anheben des Lastaufnahmemittels kann das Lagergut angehoben werden. Anschließend wird das Lastaufnahmemittel so weit eingefahren, dass das Lagergut aus dem Bereich des Regallagers entfernt ist und innerhalb der Lagergasse verfahren werden kann.

Automatische Hochregallager können eine zweifachtiefe Lagerung von Ladehilfsmitteln ermöglichen. Dabei sind in einem Regal zwei Lagerplätze hintereinander vorgesehen. Der hintere Lagerplatz kann dabei nur erreicht werden, wenn der vordere Lagerplatz unbesetzt ist. Bauhöhenbedingt muss bei einer solchen zweifachtiefen Lagerung das hintere Ladehilfsmittel erhöht gelagert werden, um mit dem oder den Aufnahmezinken in den Freiraum des Ladehilfsmittels einfahren zu können. Dies ist dem großen Abstand zwischen dem hinteren Lagerplatz und dem Regalbediengerät und damit der großen Teleskopierlänge geschuldet. Dazu kommt das hohe Gewicht der anzuhebenden Last, so dass es insgesamt zu einer nicht unerheblichen Durchbiegung des Lastaufnahmemittels kommt. Durch den ungenutzten Raum durch die erhöhte Lagerung des hinteren Ladehilfsmittels geht wertvoller Stauraum in dem Regallager verloren.

### DARSTELLUNG DER ERFINDUNG

Ausgehend von diesem vorbekannten Stand der Technik liegt der Erfindung die Aufgabe zugrunde, ein verbessertes Lastaufnahmemittel anzugeben, bei der die hinteren Ladehilfsmittel bei einer zweifachtiefen Lagerung nicht mehr oder nur noch geringfügig erhöht gelagert werden müssen.

Die erfindungsgemäße Lastaufnahmevorrichtung ist durch die Merkmale des Hauptanspruchs 1 gegeben. Sinnvolle Weiterbildungen der Erfindung sind Gegenstand von sich an diesen Anspruch anschließenden weiteren Ansprüchen.

Die erfindungsgemäße Lastaufnahmevorrichtung besitzt zusätzlich zu dem Lastaufnahmemittel eine Stützvorrichtung, mittels der zumindest eines der Teleskopelemente des Lastaufnahmemittels in seinem ausgefahrenen Zustand abgestützt werden kann. Erfindungsgemäß zeichnet sich die Lastaufnahmevorrichtung dadurch aus, dass die Stützvorrichtung einen ausfahrbaren Stützarm aufweist, der unterhalb der ausfahrbaren Teleskopelemente des Lastaufnahmemittels vorhanden ist. Im ausgefahrenen Zustand des Lastaufnahmemittels kann zumindest eines der Teleskopelemente auf dem Stützarm der Stützvorrichtung aufliegen. Das Gewicht der ausfahrbaren Teleskopelemente und des von dem Lastaufnahmemittel getragenen Lagerguts kann somit teilweise von dem Stützarm aufgenommen werden, so dass geringere Belastungen und Verformungen des Lastaufnahmemittels erreicht werden können.

Auf diese Weise kann die freitragende Länge des Lastaufnahmemittels im ausgefahrenen Zustand verkürzt werden, wodurch sich die Durchbiegung des Lastaufnahmemittels reduzieren lassen kann. Darüber hinaus kann sich bei gleicher Durchbiegung des Lastaufnahmemittels die ausfahrende Querschnittshöhe des Lastaufnahmemittels reduzieren. Dadurch kann der Höhenversatz bei einer zweifachtiefen Lagerung der Ladehilfsmittel reduziert werden oder im Idealfall vollständig entfallen.

Der Stützarm ist an dem Basiselement des Lastaufnahmemittels verschieblich gelagert. Dadurch kann die Lastaufnahmevorrichtung aus Lastaufnahmemittel und Stützarm als ein kompaktes Bauteil gefertigt werden und anschließend über das Basiselement des Lastaufnahmemittels an dem Regalbediengerät befestigt werden. Folglich kann das Regalbediengerät weitgehend unverändert vorliegen; lediglich die Anschlusselemente für das Lastaufnahmemittel müssen gegebenenfalls angepasst werden. Dies ermöglicht eine wirtschaftliche Fertigung und eine einfache Nachrüstung bereits existierender Regalbediengeräte.

Dieser Stützarm ist verschieblich gelagert, so dass ein Ausfahren des Stützarms möglich ist. Dieses Ausfahren kann insbesondere parallel zum Ausfahren des Lastaufnahmemittels erfolgen, so dass sich das entsprechende Teleskopelement frühzeitig auf dem Stützarm abstützen kann. Der Stützarm kann ebenfalls teleskopierbar ausgebildet sein, so dass der Stützarm beispielsweise sowohl am untersten Teleskopelement als auch einem der mittleren Teleskopelemente angreifen kann.

Vorzugsweise kann am vorderen Endbereich des Stützarms ein Stützelement vorhanden sein, das aus der Ebene des Stützarms nach oben herausgeklappt werden kann, so dass das Teleskopelement in seinem ausgefahrenen Zustand auf dem Stützelement aufliegt. Durch das ausgeklappte Stützelement ist es möglich, den Stützarm und das Lastaufnahmemittel mit einem gewissen gegenseitigen Abstand voneinander auszubilden, so dass die Querträger des Regallagers zwischen dem Lastaufnahmemittel und dem Stützarm verlaufen können. Das Herausklappen des Stützelements kann beispielsweise hydraulisch, elektromechanisch oder pneumatisch erfolgen. Das Herausklappen des Stützelements erfolgt dabei vorzugsweise nach gewissen Bewegungsabläufen, insbesondere nach dem Passieren des Querträgers. Das Lastaufnahmemittel wird dabei oberhalb des Querträgers ausgefahren, der Stützarm unterhalb des Querträgers. Nachdem der Querträger passiert worden ist, kann das Stützelement herausgeklappt werden, um die Teleskopelemente des Lastaufnahmemittels abzustützen. Es wäre auch möglich, den Stützarm und das Lastaufnahmemittel jeweils oberhalb des Querträgers auszufahren.

Beim Einfahren der Lastaufnahmemittel und des Stützarms kann das Stützelement ebenfalls über eine entsprechende Mechanik rechtzeitig vor dem Erreichen des Querträgers wieder in die Ebene des Stützarms eingeklappt werden. Es wäre jedoch auch möglich, das Stützelement so auszubilden, dass dieses bei einer Berührung des Querträgers beim Einfahren nach hinten wegklappt, so dass der Querträger ungehindert passiert werden kann.

Am vorderen Endbereich des Stützelements kann in einer besonders bevorzugten Ausführungsform eine Führungsrolle oder vergleichbare gleitende Elemente angeordnet sein. Auf dieser Führungsrolle kann das entsprechende Teleskopelement des Lastaufnahmemittels aufliegen. Auf diese Weise kann das Abstützen des Lastaufnahmemittels bereits während des Ausfahrens desselben erfolgen, so dass die Durchbiegung des Lastaufnahmemittels von Anfang an effektiv verhindert werden kann.

Alternativ dazu kann das Stützelement in einer bevorzugten Ausführungsform lösbar an der Unterseite eines der Teleskopelemente befestigt werden. Dies kann insbesondere durch Klemmen und/oder Verriegeln erfolgen, auch eine Befestigung über einen Haken oder eine mechanische Nase wäre denkbar. Auf diese Weise kann die Durchbiegung des ausgefahrenen Lastaufnahmemittels ebenfalls weiter reduziert werden.

Vorzugsweise kann das Basiselement eine obere Laufschiene und eine untere Laufschiene aufweisen. An der oberen Laufschiene kann das teleskopierbare Lastaufnahmemittel gelagert sein, während der Stützarm an der unteren Laufschiene verschieblich gelagert sein kann. Auf diese Weise kann eine einfache und effektive Kopplung beim Ausfahren von Lastaufnahmemittel und Stützarm erreicht werden. Gleichzeitig wird ein kompakter Aufbau ermöglicht, der im eingefahrenen Zustand nur geringen Platz benötigt. Der zwischen dem Stützarm und dem Lastaufnahmemittel erforderliche Platz - um beispielsweise die Querträger in dem Regal umgreifen zu können - kann durch die Gestaltung des Basiselements bereits erreicht werden.

In einer bevorzugten Ausführungsform kann das unterste Teleskopelement als Teleskoptisch ausgebildet sein. Der Teleskoptisch weist aufgrund seiner Breite eine deutlich größere Biegesteifigkeit auf als die verhältnismäßig schmalen Aufnahmezinken, so dass auch bei einer sehr flachen Bauweise des Teleskoptischs die Durchbiegung des ausgefahrenen Lastaufnahmemittels deutlich verringert werden kann. Auf diese Weise ist es möglich, das hintere Ladehilfsmittel lediglich noch geringfügig erhöht zu lagern, so dass sich in der Höhe eine deutliche Einsparung ergibt.

In einer weiteren Ausführungsform können an der Unterseite des Teleskoptischs Gleitrollen oder andere gleitende Werkstoffe vorhanden sein. Dadurch kann sich der Teleskoptisch im ausgefahrenen Zustand an dem im Hochregallager vorhandenen Querträger von oben abstützen, so dass die Durchbiegung des ausgefahrenen Lastaufnahmemittels weiter reduziert werden kann. Zusätzlich dazu können die auftretenden Querkräfte weitgehend vermieden werden.

Vorzugsweise kann an den beiden seitlichen Randbereichen des Teleskoptischs jeweils eine Laufschiene vorhanden sein. Auf diesen Laufschienen kann jeweils ein Aufnahmezinken gelagert sein, der von dem Teleskoptisch in das Regallager ausgefahren werden kann. Da die Ladehilfsmittel in der Regel von zwei Aufnahmezinken gehalten werden, kann der Platz zwischen den beiden Aufnahmezinken optimal ausgenutzt werden, um die Steifigkeit des Lastaufnahmemittels zu erhöhen, ohne die Außenmaße des Lastaufnahmemittels selbst vergrößern zu müssen.

Die auf den Laufschienen gelagerten Aufnahmezinken können selbst aus zumindest zwei Teleskopelementen bestehen, um die Aufnahmezinken ausreichend tief in das Hochregallager einführen zu können. Dabei können die Aufnahmezinken so gefertigt werden, wie dies bereits im Stand der Technik bekannt ist, so dass zumindest teilweise Standardteile für die Fertigung der erfindungsgemäßen Lastaufnahmevorrichtung verwendet werden können, was eine kostengünstige Herstellung derselben erlaubt.

In einer weiteren bevorzugten Ausführungsform kann das unterste und/oder eines der mittleren Teleskopelemente mit einer oder mit mehreren Fahrrollen, Gleitrollen oder ähnlichen gleitenden Werkstoffen ausgestattet sein. Diese Fahrrollen, Gleitrollen oder ähnlichen gleitenden Werkstoffe erlauben in der ersten Fachtiefe eine Abstützung des entsprechenden Teleskopelements auf den Querträgern im Hochregallager, auf denen auch die Ladehilfsmittel stehen. Dadurch kann die freitragende Länge des Lastaufnahmemittels verkürzt werden, was eine geringere Durchbiegung auf die gesamte Länge des ausgefahrenen Lastaufnahmemittels zur Folge hat. Dementsprechend kann eine erhöhte Lagerung des hinteren Lastaufnahmemittels zumindest reduziert werden.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine perspektivische Ansicht einer ersten Ausführungsform der erfindungsgemäßen Lastaufnahmevorrichtung in ihrem ausgefahrenen Zustand, bei der das unterste Teleskopelement des Lastaufnahmemittels auf einem Stützarm aufliegt,
- Fig. 2: eine perspektivische Ansicht des herausgeklappten Stützelements und des Stützarms gemäß Fig. 2
- Fig. 3: einen Querschnitt durch eine zweite Ausführungsform der erfindungsgemäßen Lastaufnahmevorrichtung, bei der das unterste Teleskopelement des Lastaufnahmemittels als Teleskoptisch ausgebildet ist,
- Fig. 4: eine perspektivische Ansicht der ausgefahrenen Lastaufnahmevorrichtung gemäß Fig. 3,
- Fig. 5: eine Seitenansicht einer dritten Ausführungsform der erfindungsgemäßen Lastaufnahmevorrichtung in ihrem ausgefahrenen Zustand und
- Fig. 6: eine Seitenansicht der dritten Ausführungsform gemäß Fig. 5 in einem alternativen Hochregallager.

### WEGE ZUM AUSFÜHREN DER ERFINDUNG

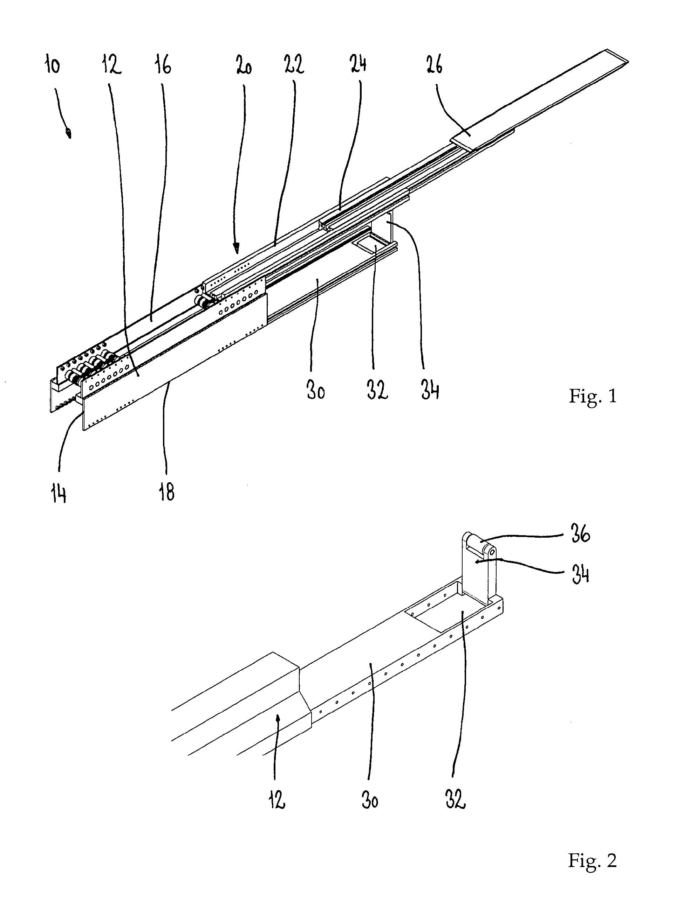

Eine erste Ausführungsform der erfindungsgemäßen Lastaufnahmevorrichtung 10 ist in Fig. 1 und 2 dargestellt. Die Lastaufnahmevorrichtung 10 besitzt ein Basiselement 12, das an einem in der Zeichnung nicht dargestellten Regalbediengerät befestigt werden kann. Das Basiselement 12 besitzt ein Distanzprofil 14, an dessen Oberseite eine erste Laufschiene 16 und an dessen Unterseite eine zweite Laufschiene 18 angeformt ist.

An der ersten Laufschiene 16 ist ein teleskopierbares Lastaufnahmemittel 20 längsverschieblich gelagert. Das teleskopierbare Lastaufnahmemittel 20 besitzt im vorliegenden Beispielsfall drei Teleskopelemente 22, 24, 26. Das oberste Teleskopelement 26 ist als Aufnahmezinken ausgebildet.

An der zweiten Laufschiene 18 ist ein Stützarm 30 längsverschieblich gelagert. Der Stützarm 30 ist im vorliegenden Beispielsfall nicht aus mehreren Teleskopelementen aufgebaut. Am vorderen Endbereich 32 des Stützarms 30 ist ein Stützelement 34 vorhanden (siehe Fig. 2). Das Stützelement 34 kann aus der Ebene des Stützarms 30 herausgeklappt werden, so dass das Stützelement 34 etwa senkrecht von dem Stützarm 30 nach oben weist. Der obere Endbereich des Stützelements 34 ist in dem hier dargestellten Ausführungsbeispiel mit einer Führungsrolle 36 ausgestattet. Auf dieser Führungsrolle 36 kann das unterste Teleskopelement 22 des Lastaufnahmemittels 20 aufliegen, so dass das Lastaufnahmemittel 20 von unten durch den Stützarm 30 abgestützt werden kann. Die Länge des Stützarms 30 entspricht im vorliegenden Beispielsfall in etwa der Länge des untersten Teleskopelements 22, so dass das Stützelement 34 das unterste Teleskopelement 22 möglichst weit vorne abstützt, so dass die freitragende Länge des ausgefahrenen Lastaufnahmemittels 20 so weit wie möglich reduziert werden kann. Dadurch kann die Durchbiegung des Lastaufnahmemittels 20 so weit reduziert werden, dass bei einer zweifachtiefen Lagerung von Ladehilfsmitteln in einem Hochregallager keine erhöhte Lagerung der hinteren Ladehilfsmittel mehr erforderlich ist.

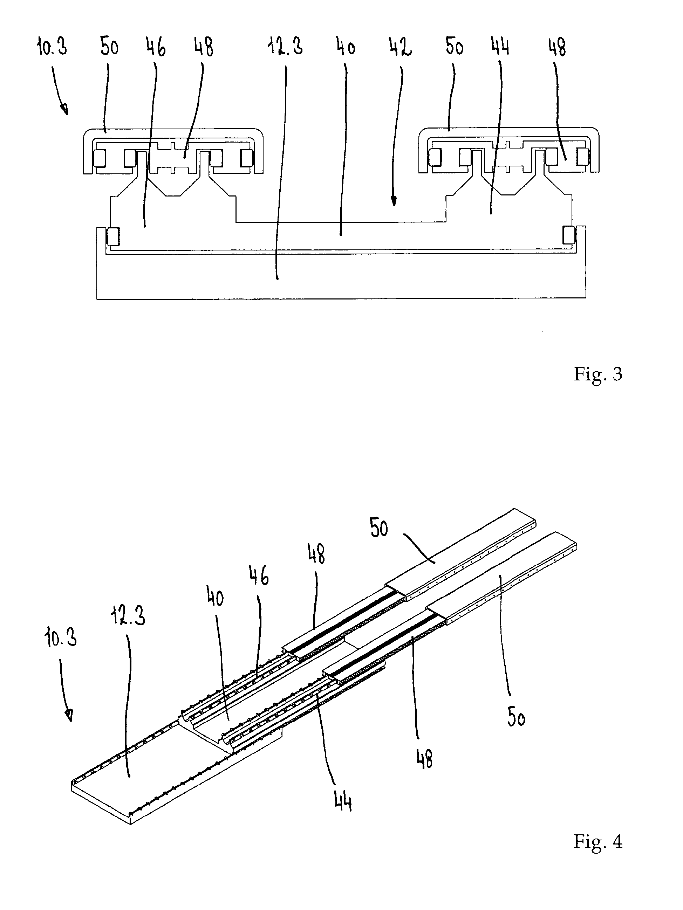

Eine zweite Ausführungsform der erfindungsgemäßen Lastaufnahmevorrichtung 10.3 ist in den Fig. 3 und 4 dargestellt. Das Basiselement 12.3 der Lastaufnahmevorrichtung 10.3 ist plattenförmig ausgebildet und kann an einem Regalbediengerät befestigt werden. An dem Basiselement 12.3 ist ein Teleskoptisch 40 als unterstes Teleskopelement des Lastaufnahmemittels 42 verschieblich gelagert. Der Teleskoptisch 40 weist an seinen beiden Randbereichen eine rechte Laufschiene 44 und eine linke Laufschiene 46 auf. In den beiden Laufschienen ist jeweils ein mittleres Teleskopelement 48 längsverschieblich gelagert. An den beiden mittleren Teleskopelementen 48 ist das oberste Teleskopelement 50, das jeweils als Aufnahmezinken ausgebildet ist, ebenfalls längsverschieblich gelagert. Das Lastaufnahmemittel 42 weist somit zwei Aufnahmezinken auf, so dass eine Palette sicher mit der Lastaufnahmevorrichtung 10.3 angehoben und transportiert werden kann.

Durch die Ausbildung des Teleskoptischs 40 als unterstes Teleskopelement kann die Durchbiegung bei ausgefahrenem Lastaufnahmemittel 42 deutlich reduziert werden, so dass eine erhöhte Lagerung des hinteren Ladehilfsmittels bei einer doppeltiefen Lagerung nicht länger erforderlich ist. Im Gegensatz zu der in der Zeichnung dargestellten Ausführungsform könnte der Teleskoptisch 40 durch einen in Fig. 1 und 2 dargestellten Stützarm 30 zusätzlich abgestützt werden. Dadurch kann die Durchbiegung noch weiter verringert werden, so dass gegebenenfalls sogar bei einer dreifachtiefen Lagerung der Höhenversatz des hintersten Ladehilfsmittels deutlich reduziert werden kann.

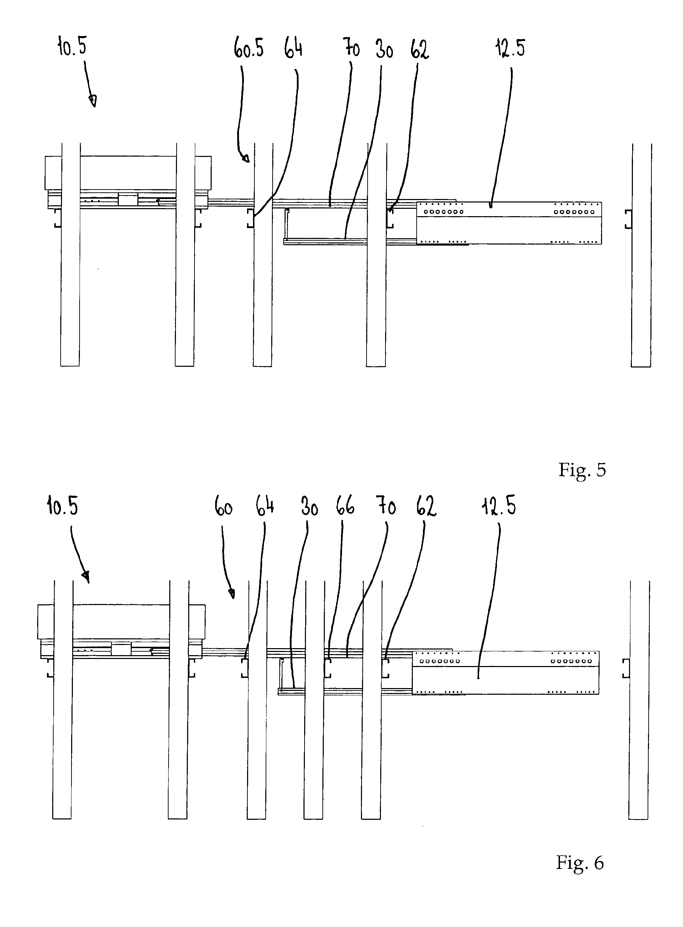

Eine dritte Ausführungsform der erfindungsgemäßen Lastaufnahmevorrichtung 10.5 ist in Fig. 5 und 6 dargestellt. Die Lastaufnahmevorrichtung 10.5 bietet sich insbesondere dann an, wenn das Hochregallager 60 auf dem vorderen Lagerplatz neben dem vorderen Querträger 62 und dem hinteren Querträger 64 noch einen mittleren Querträger 66 aufweist, wie dies in Fig. 6 der Fall ist. In diesem Fall kann das unterste Teleskopelement 70 des Lastaufnahmemittels, das an dem Basiselement 10.5 längsverschieblich gelagert ist, mit Fahrrollen auf dem vorderen Querträger 62 und dem mittleren Querträger 66 aufliegen, so dass die freitragenden Länge des ausgefahrenen Lastaufnahmemittels und damit die Durchbiegung reduziert werden kann. Zusätzlich dazu kann eine Unterstützung über einen Stützarm 30 erfolgen. Bei einem Hochregallager 60.5 gemäß Fig. 5 kann das unterste Teleskopelement 70 des Lastaufnahmemittels mit Fahrrollen lediglich auf dem vorderen Querträger 62 aufliegen. Auch in diesem Fall kann eine zusätzliche Unterstützung durch einen Stützarm 30 erfolgen. Im Gegensatz zu den in Fig. 5 und 6 dargestellten Ausführungsformen, könnte auf die Ausbildung des Stützarms 30 auch verzichtet werden, so dass lediglich eine Abstützung über die Fahrrollen erfolgen würde.

## Patentansprüche

1. Lastaufnahmevorrichtung (10) für ein Regalbediengerät,
- mit zumindest einem teleskopierbar ausgebildeten Lastaufnahmemittel (20), das zumindest zwei Teleskopelemente (22, 24, 26) aufweist,
- wobei das oberste Teleskopelement (26) mit zumindest einem Aufnahmezinken ausgebildet ist,
- wobei das unterste Teleskopelement (22) an einem Basiselement (12) verschieblich gelagert ist, das an dem Regalbediengerät befestigbar ist,
- wobei eine Stützvorrichtung (30) an der Lastaufnahmevorrichtung (10) vorhanden ist, mittels der zumindest eines der Teleskopelemente (22) in seinem ausgefahrenen Zustand abstützbar ist,
- **dadurch gekennzeichnet, dass**
- die Stützvorrichtung einen ausfahrbaren Stützarm (30) aufweist, der unterhalb des Lastaufnahmemittels (20) vorhanden ist,
- zumindest eines der Teleskopelemente (22) in seinem ausgefahrenen Zustand auf dem Stützarm (30) der Stützvorrichtung aufliegt,
- der Stützarm (30) an dem Basiselement (12) verschieblich gelagert ist.

2. Lastaufnahmevorrichtung nach Anspruch 1,
- **dadurch gekennzeichnet, dass**
- der Stützarm teleskopierbar ausgebildet ist.

3. Lastaufnahmevorrichtung nach Anspruch 1 oder 2,
- **dadurch gekennzeichnet, dass**
- am vorderen Endbereich (32) des Stützarms (30) ein Stützelement (34) vorhanden ist, das aus der Ebene des Stützarms nach oben herausklappbar ist, so dass das Teleskopelement (22) in seinem ausgefahrenen Zustand auf dem Stützelement (34) aufliegt.

4. Lastaufnahmevorrichtung nach Anspruch 3,
- **dadurch gekennzeichnet, dass**
- am vorderen Endbereich des Stützelements (34) zumindest eine Führungsrolle (36) angeordnet ist.

5. Lastaufnahmevorrichtung nach einem der vorstehenden. Ansprüche,
- **dadurch gekennzeichnet, dass**
- das Basiselement (12) eine obere Laufschiene (16) für das teleskopierbare Lastaufnahmemittel (20) und eine untere Laufschiene (18) für den Stützarm (30) aufweist.

6. Lastaufnahmevorrichtung nach einem der vorstehenden Ansprüche,
- **dadurch gekennzeichnet, dass**
- das hinterste Teleskopelement des Lastaufnahmemittels als Teleskoptisch (40) ausgebildet ist.

7. Lastaufnahmevorrichtung nach Anspruch 6,
- **dadurch gekennzeichnet, dass**
- an der Unterseite des Teleskoptischs Gleitrollen oder Gleitelemente vorhanden sind.

8. Lastaufnahmevorrichtung nach Anspruch 6 oder 7,
- **dadurch gekennzeichnet, dass**
- an den beiden seitlichen Randbereichen des Teleskoptischs (40) jeweils eine Laufschiene (44, 46) für einen Aufnahmezinken vorhanden ist.

9. Lastaufnahmevorrichtung nach einem der Ansprüche 6 bis 8,
- **dadurch gekennzeichnet, dass**
- der Aufnahmezinken aus zumindest zwei Teleskopelementen besteht.

10. Lastaufnahmevorrichtung nach einem der vorstehenden Ansprüche,
- **dadurch gekennzeichnet, dass**
- das unterste und/oder eines der mittleren Teleskopelemente mit einer oder mehreren Fahrrollen, Gleitrollen oder Gleitelementen ausgestattet ist.

## Claims

1. Load-bearing apparatus (10) for a storage-and-retrieval unit,
- having at least one telescopically designed load-bearing means (20), which has at least two telescopic elements (22, 24, 26),
- wherein the uppermost telescopic element (26) is designed with at least one accommodating tine,
- wherein the lowermost telescopic element (22) is mounted in a displaceable manner on a base element (12), which can be fastened on the storage-and-retrieval unit,
- wherein a supporting apparatus (30) is present on the load-bearing apparatus (10) and can support at least one of the telescopic elements (22) in its extended state,
- **characterized in that**
- the supporting apparatus has an extendable supporting arm (30), which is present beneath the load-bearing means (20),
- at least one of the telescopic elements (22), in its extended state, rests on the supporting arm (30) of the supporting apparatus,
- the , supporting arm (30) is mounted in a displaceable manner on the base element (12).

2. Load-bearing apparatus according to Claim 1,
- **characterized in that**
- the supporting arm is of telescopic design.

3. Load-bearing apparatus according to Claim 1 or 2,
- **characterized in that**
- the front end region (32) of the supporting arm (30) has present on it a supporting element (34), which can be swung upwards out of the plane of the supporting arm, and therefore the telescopic element (22), in its extended state, rests on the supporting element (34).

4. Load-bearing apparatus according to Claim 3,
- **characterized in that**
- at least one guide roller (36) is arranged on the front end region of the supporting element (34).

5. Load-bearing apparatus according to one of the preceding claims,
- **characterized in that**
- the base element (12) has an upper running rail (16) for the telescopic load-bearing means (20) and a lower running rail (18) for the supporting arm (30).

6. Load-bearing apparatus according to one of the preceding claims,
- **characterized in that**
- the rearmost telescopic element of the load-bearing means is designed in the form of a telescopic table (40).

7. Load-bearing apparatus according to Claim 6,
- **characterized in that**
- sliding rollers or sliding elements are present on the underside of the telescopic table.

8. Load-bearing apparatus according to Claim 6 or 7,
- **characterized in that**
- a respective running rail (44, 46) for an accommodating tine is present on the two lateral periphery regions of the telescopic table (40).

9. Load-bearing apparatus according to one of Claims 6 to 8,
- **characterized in that**
- the accommodating tine comprises at least two telescopic elements.

10. Load-bearing apparatus according to one of the preceding claims,
- **characterized in that**
- the lowermost and/or one of the central telescopic elements are/is provided with one or more casters, sliding rollers or sliding elements.

## Revendications

1. Dispositif récepteur de charge (10) pour un appareil de desserte de rayonnages,
- avec au moins un moyen récepteur de charge (20) réalisé télescopique, qui présente au moins deux éléments télescopiques (22, 24, 26),
- sachant que l'élément télescopique supérieur (26) est réalisé avec au moins un fourchon récepteur,
- sachant que l'élément télescopique inférieur (22) est monté à coulissement sur un élément de base (12) qui peut être fixé sur l'appareil de desserte de rayonnages,
- sachant qu'un dispositif de soutien (30) est présent sur le dispositif récepteur de charge, au moyen duquel au moins un (22) des éléments télescopiques peut être soutenu dans son état déployé,
**caractérisé en ce que**
- le dispositif de soutien présente un bras de soutien déployable (30), qui est présent en dessous du moyen récepteur de charge (20),
- au moins un (22) des éléments télescopiques repose dans son état déployé sur le bras de soutien (30) du dispositif de soutien,
- le bras de soutien (30) est monté à coulissement sur l'élément de base (12).

2. Dispositif récepteur de charge selon la revendication 1, **caractérisé en ce que** le bras de soutien est réalisé télescopique.

3. Dispositif récepteur de charge selon la revendication 1 ou 2, **caractérisé en ce qu'**un élément de soutien (34) est présent dans la région terminale avant (32) du bras de soutien (30), élément qui peut être rabattu vers le haut en dehors du plan du bras de soutien, de sorte que l'élément télescopique (22) repose dans son état déployé sur l'élément de soutien (34).

4. Dispositif récepteur de charge selon la revendication 3, **caractérisé en ce qu'**au moins un rouleau de guidage (36) est disposé dans la région terminale avant de l'élément de soutien (34).

5. Dispositif récepteur de charge selon l'une des revendications précédentes, **caractérisé en ce que** l'élément de base (12) présente un rail de roulement supérieur (16) pour le moyen récepteur de charge télescopique (20) et un rail de roulement inférieur (18) pour le bras de soutien (30).

6. Dispositif récepteur de charge selon l'une des revendications précédentes, **caractérisé en ce que** l'élément télescopique arrière du moyen récepteur de charge est réalisé sous forme de plateau télescopique (40).

7. Dispositif récepteur de charge selon la revendication 6, **caractérisé en ce que** des galets de glissement ou des éléments de glissement sont présents sur le dessous du plateau télescopique.

8. Dispositif récepteur de charge selon la revendication 6 ou 7, **caractérisé en ce qu'**un rail de glissement respectif (44, 46) pour un fourchon récepteur est présent sur chacune des deux régions de bords latéraux du plateau télescopique (40).

9. Dispositif récepteur de charge selon l'une des revendications 6 à 8, **caractérisé en ce que** le fourchon récepteur est constitué d'au moins deux éléments télescopiques.

10. Dispositif récepteur de charge selon l'une des revendications précédentes, **caractérisé en ce que** l'élément télescopique inférieur et/ou un des éléments télescopiques intermédiaires sont équipés d'un ou de plusieurs galets de roulement, galets de glissement ou éléments de glissement.
